(19) Europäisches Patentamt
European Patent Office
Office européen des brevets

(11) Veröffentlichungsnummer: **0 259 722 B1**

# (12) EUROPÄISCHE PATENTSCHRIFT

(45) Veröffentlichungstag der Patentschrift: **10.03.93**

(51) Int. Cl.[5]: **C08G 18/36**, C08G 18/48, C08G 18/64, C08G 18/30

(21) Anmeldenummer: **87112539.9**

(22) Anmeldetag: **28.08.87**

## (54) Verfahren zur Herstellung neuer, massiver Polyurethanwerkstoffe im Giessverfahren.

(30) Priorität: **05.09.86 DE 3630264**

(43) Veröffentlichungstag der Anmeldung:
**16.03.88 Patentblatt 88/11**

(45) Bekanntmachung des Hinweises auf die Patenterteilung:
**10.03.93 Patentblatt 93/10**

(84) Benannte Vertragsstaaten:
**AT BE CH DE ES FR GB IT LI LU NL SE**

(56) Entgegenhaltungen:
**EP-A- 0 125 579**
**DE-A- 3 347 045**
**FR-A- 1 281 243**
**FR-A- 1 434 802**
**US-A- 4 124 609**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Höfer, Rainer, Dr.**
**Kleverstrasse 31**
**W-4000 Düsseldorf 30(DE)**
Erfinder: **Gruber, Bert, Dr.**
**Albert-Schlangen-Strasse 28**
**W-5012 Bedburg(DE)**
Erfinder: **Meffert, Alfred, Dr.**
**Marie-Curie-Strasse 10**
**W-4019 Monheim(DE)**
Erfinder: **Grützmacher, Roland**
**Heinrich-Heine-Strasse 2**
**W-5603 Wülfrath(DE)**

**EP 0 259 722 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung neuer, massiver Polyurethanwerkstoffe im Gießverfahren.

Polyurethankunststoffe werden seit Jahren in zahlreichen Gebieten der Technik verwendet. So werden Schaumstoffe, Lacke und Klebstoffe auf Polyurethanbasis hergestellt und finden immer weitere Verbreitung. Ein weiteres, an Wichtigkeit zunehmendes Einsatzgebiet für Polyurethane ist das Gebiet der sogenannten "Massivwerkstoffe". Ein Grund für die zunehmende Verbreitung derartiger massiver Polyurethanwerkstoffe ist die Tatsache, daß diese mit Hilfe zahlreicher Verfahren in die für das Anwendungsgebiet gewünschte Form gebracht werden können. So können Polyurethanelastomere extrudiert, kalandriert und nach den üblichen Spritzgießverfahren verarbeitet werden. Auf dem Gebiet vulkanisierfähiger, kautschukartiger Polyurethanmischungen ist auch eine Formgebung mit Hilfe der in der Gummiindustrie üblichen Formgebungsverfahren möglich. Außerdem werden massive Polyurethanformkörper auch durch maschinelle oder manuelle Gießverfahren hergestellt. Auf dem Sektor derartiger, sogenannter "Polyurethangießharze" stehen Polyurethanwerkstoffe technologisch im Wettstreit mit ungesättigten Polyestern, Epoxidharzen und kaltvernetzenden Siliconkautschuken. Insbesondere im Vergleich mit kalthärtenden Epoxidharzen stoßen Polyurethansysteme wegen der leichteren Verarbeitbarkeit auf Interesse und bieten sich als kostengünstiger Rohstoff an. Wichtigstes Einsatzgebiet für derartige Gießharze ist der Elektroisoliersektor, wo Polyurethanformstoffe als Kabelvergußmassen, Batterieverschlüsse, als Deckverguß für Kondensatoren oder als Einbettungsmasse für Klingeltransformatoren eingesetzt werden.

Polyurethangießsysteme sind aus dem Stand der Technik in weitem Umfang bekannt. Sie bestehen in der Regel aus dem sogenannten "Reaktionsharz", also einer mindestens zwei endständige Isocyanat-(N = C = O)-Gruppen enthaltenden Verbindung und einem Reaktionsmittel ("Härter"). Diese beiden Komponenten werden, gegebenenfalls in Gegenwart eines sauren Katalysators, miteinander homogen vermischt. Die resultierende Reaktionsmasse wird unter Zufügung gegebenenfalls erwünschter Additive, wie Füllstoffe, Pigmente, Trockenmittel usw., in die dafür vorgesehene Form gegossen; die Aushärtung des im Zuge der Polyadditionsreaktion gebildeten Urethanpolymeren erfolgt dann in Abhängigkeit von den eingesetzten Komponenten, dem verwendeten Härter, der verwendeten Katalysatormenge und anderer für die Bildung des Polymeren entscheidender Reaktionsparameter. Derartige Polyurethangießsysteme werden beispielsweise in G.W. Becker und D. Braun "Kunststoffhandbuch", Band VII (Polyurethane), Verlag Hanser, 1983 oder in B.A. Dombrow, "Polyurethanes", 2nd Edition, New York (1965), beschrieben.

Als Reaktionsmittel ("Härter") für die Herstellung Von Gießharzen sind im Stand der Technik Polyetherpolyole, Polyesterpolyole und Polyetherpolyesterpolyole vorgeschlagen worden. Derartige Polyole werden auf synthetischem Wege aus Erdöl dargestellt, lassen sich also nicht von nachwachsenden, erneuerbaren und aus natürlichen Quellen regenerierbaren Rohstoffen ableiten. Aufgrund der zunehmend knapper werdenden Erdölresourcen bestand somit Bedarf, Reaktionsmittel für die Herstellung von Gießharzen herzustellen, die aus natürlichen Quellen stammen und sich somit sukzessive regenerieren.

Als ein derartiges Naturprodukt wurde Rizinusöl als Reaktionsmittel für die Herstellung von Gießharzen vorgeschlagen: Als Härter für Polyurethanvergußmassen zur Einkapselung elektronischer Bauteile wurde Rizinusöl bereits sehr früh verwendet ("Plastics Laboratory", Princetown University, "Castor Oil Polyurethanes And Applications As Potting Components", U.S.O.T. Seite 99165). Die bei Verwendung von Rizinusöl erhaltenen massiven Polyurethanwerkstoffe erfüllten jedoch nicht die modernen Anforderungen hinsichtlich Zugfestigkeit, Härte, thermischer Verformungsfestigkeit und elektrischen Eigenschaften.

In der DE-OS 33 47 045 werden Polyurethanzubereitungen zur Verwendung als Klebstoff beschrieben. Als Härter wird ein Polyol verwendet, welches durch Umsetzung von epoxidierten Fettalkoholen, Fettsäureestern und Fettsäureamiden mit aliphatischen oder aromatischen Alkoholen hergestellt wurde.
In der EP 125 579 A2 werden derartige Polyole zur Herstellung von Polyurethan-Prepolymeren beschrieben. Sie dienen als Vorstufe zur Bildung von Schäumen. Von einer Verwendung der Polyole zur Herstellung von massiven Polyurethan-Werkstoffen im Gießverfahren ist keine Rede.

Aufgabe der vorliegenden Erfindung war es, ein Verfahren zur Herstellung neuer, massiver Polyurethanwerkstoffe im Gießverfahren zur Verfügung zu stellen, mit dem unter Einsatz kostengünstig erhältlicher Ausgangsstoffe Polyurethanwerkstoffe im Gießverfahren hergestellt werden können, die verbesserte, den Anwendungserfordernissen optimal angepaßte Eigenschaften zeigen. Insbesondere sollten die eingesetzten Ausgangsstoffe aus nativen, d.h. nachwachsenden und sich ständig erneuernden Rohstoffquellen zugänglich sein. Die mit dem erfindungsgemäßen Verfahren hergestellten Formmassen sollten insbesondere hinsichtlich der erzielbaren Härte, Festigkeit und Formbeständigkeit den bisher bekannten Werkstoffen überlegen sein. Desweiteren sollten Härter Einsatz finden, die im Vergleich zu Rizinusöl eine höhere funktionelle Variierbarkeit aufweisen.

Überraschend wurde nun gefunden, daß massive Polyurethanwerkstoffe mit deutlich besseren Eigenschaften erhalten werden können, wenn man als Reaktionsmittel ("Härter") bei der Herstellung von Polyurethanwerkstoffen Ringöffnungsprodukte epoxidierter Triglyceridöle mit einwertigen niederen Alkoholen verwendet.

Die Erfindung betrifft ein Verfahren zur Herstellung neuer, massiver Polyurethanwerkstoffe im Gießverfahren unter Verwendung wenigstens zwei Isocyanatgruppen pro Molekül enthaltender Isocyanate und mindestens zwei Hydroxygruppen pro Molekül enthaltender Alkohole, das dadurch gekennzeichnet ist, daß man einwertige Alkohole mit 1 bis 8 C-Atomen unter Einstellung eines Molverhältnisses im Bereich von 1,05 bis 10 Mol pro Mol Epoxidsauerstoff an epoxidierte Triglyceridöle addiert, die gegebenenfalls gereinigten Additionsprodukte gewünschtenfalls mit Alkylenoxiden mit 2 bis 4 C-Atomen im Molverhältnis von 1 bis 50 Mol Alkylenoxid pro Mol Epoxidsauerstoff zur Reaktion bringt, die Produkte vor oder nach der Alkoxylierung gegebenenfalls einer thermischen Nachbehandlung unterzieht und die resultierenden Produkte mit den Isocyanaten im Verhältnis OH : NCO im Bereich von 1 : 0,9 bis 1,3 zu einer einheitlichen, flüssigen Harzmasse vermischt, gegebenenfalls Additive zusetzt und die Reaktionsmischungen in einer Form aushärten läßt.

Der erste Schritt des erfindungsgemäßen Verfahrens zur Herstellung neuer, massiver Polyurethanwerkstoffe besteht darin, daß man einwertige Alkohole mit 1 bis 8 C-Atomen an epoxidierte Triglyceridöle addiert. Als Alkohole kommen dabei die geradkettigen Alkohole Methanol, Ethanol, n-Propanol, n-Butanol, n-Pentanol, n-Hexanol, n-Heptanol, n-Octanol oder deren in der Alkylkette verzweigte bzw. die Hydroxylgruppe an einem sekundären oder tertiären C-Atom tragenden Isomeren in Frage. Bevorzugt werden für die Addition an epoxidierte Triglyceridöle Alkohole aus der Gruppe Methanol, Ethanol, n-Propanol, i-Propanol, n-Butanol, i-Butanol und t-Butanol verwendet. Von diesen ist Methanol aufgrund seiner preiswerten Zugänglichkeit und der guten Ergebnisse, die bei Verwendung dieses Alkohols in den Polyurethanwerkstoffen erzielt werden, besonders bevorzugt.

Epoxidierte Triglyceridöle, wie sie in dem erfindungsgemäßen Verfahren Verwendung finden, sind als solche aus dem Stand der Technik bekannt. Sie finden in anderen technischen Bereichen als sogenannte "Epoxidweichmacher" Verwendung und sind für diese Zwecke auch im Handel kommerziell erhältlich. Sie werden durch Epoxidation ungesättigter Öle, beispielsweise Sojaöl, Leinöl, Tallöl, Baumwollsaatöl, Ernußöl, Palmöl, Sonnenblumenöl, Rüböl oder Klauenöl, beispielsweise nach dem in J. Am. Chem. Soc.67, 412 (1945) beschriebenen Verfahren mit Peressigsäure erhalten. Durch die Epoxidation werden, je nach eingesetzter Menge Peressigsäure, die olefinischen Doppelbindungen der glyceridisch gebundenen Fettsäuren ganz oder teilweise in Oxyranringe überführt. Geeignet sind Triglyceride mit einer Jodzahl von 50 bis 150, die bei weitgehender Epoxidation der olefinischen Doppelbindungen in Epoxidate mit einem Gehalt von 3 bis 10 Gew.-% Epoxidsauerstoff überführt werden. Derartige Glyceridöle mit einem Gehalt von 3 bis 10 Gew.-% Epoxidsauerstoff sind deshalb gut zur Verwendung in dem erfindungsgemäßen Verfahren geeignet, weil sie als Polyolkomponenten in der Polyadditionsreaktion mit den Isocyanaten zu Polyurethanwerkstoffen mit hervorragenden Festigkeitseigenschaften führen. Besonders bevorzugt sind epoxidierte Triglyceridöle mit einem Gehalt von 4 bis 8 Gew.-% Epoxidsauerstoff.

Die Addition eines einwertigen Alkohols aus der oben genannten Gruppe an ein epoxidiertes Triglyceridöl wird - wie aus dem Stand der Technik bekannt - bevorzugt in Gegenwart eines sauren Katalysators durchgeführt. Als saure Katalysatoren kommen beispielsweise übliche Mineralsäuren, wie beispielsweise konzentrierte Schwefelsäure, in Frage. Es ist jedoch auch möglich, als saure Katalysatoren Lewis-Säuren, wie Bortrihalogenide oder deren Derivate, zu verwenden oder die Reaktion in Gegenwart eines sauren Ionenaustauschers durchzuführen. Die Verwendung saurer Ionenaustauscher ist wegen der optimalen Möglichkeit der Abtrennung des Katalysators von der Reaktionsmischung besonders bevorzugt. Der Ringöffnungskatalysator kann nach der Reaktion ausgewaschen und ausgefällt werden oder - nach Neutralisation - im Reaktionsprodukt verbleiben. Bevorzugte Verfahrensweise ist die Neutralisation mit Natriummethylat oder insbesondere mit Dialkylethanolaminen, vorzugsweise Dimethyl- oder Diethylethanolamin, unter Belassung des Neutralisationsproduktes im Produktgemisch.

Bei der Addition des einwertigen Alkohols an ein epoxidiertes Triglyceridöle wird in dem erfindungsgemäßen Verfahren zur Herstellung neuer, massiver Polyurethanwerkstoffe ein Molverhältnis Alkohol : Triglyceridöl im Bereich von vorzugsweise 3 bis 10 mol Alkohol pro Mol Epoxidsauerstoff eingestellt. Dies bedeutet, daß in der Praxis regelmäßig ein Überschuß Alkohol in die Additionsreaktion eingesetzt wird, um sicherzustellen, daß mehr oder weniger alle Oxyranringe geöffnet und in

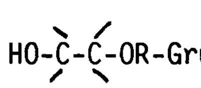-Gruppen

überführt werden, in denen R für den Alkylrest des eingesetzten Alkohols steht.

Die mit dem erfindungsgemäßen Verfahren in Schritt 1 hergestellten Additionsprodukte werden nach an sich bekannten Methoden von überschüssigen bzw. nicht umgesetzten Edukten befreit. Dies kann nach dem Fachmann an sich bekannten Methoden geschehen. Beispielsweise wird im Überschuß eingesetzer Alkohol durch Destillation, gegebenenfalls unter vermindertem Druck, aus der Additions-Produktmischung abkondensiert. Es sind jedoch auch andere, in diesem Bereich an sich bekannte Methoden der Reinigung möglich.

Gemäß dem erfindungsgemäßen Verfahren zur Herstellung neuer, massiver Polyurethanwerkstoffe ist es möglich, die gereinigten Additionsprodukte mit Alkylenoxiden mit 2 bis 4 C-Atomen zur Reaktion zu bringen. Für diese Alkoxylierungsreaktion können also Ethylenoxid, Propylenoxid oder Butylenoxid als Alkoxylierungsmittel eingesetzt werden; es ist auch möglich, Gemische der genannten Alkylenoxide zu verwenden. Bevorzugt werden für die Alkoxylierungsreaktion Ethylenoxid und/oder Propylenoxid verwendet, da die Alkoxylierung mit diesen beiden Reaktionspartnern zu Reaktionsmitteln ("Härtern") mit besonders guten Eigenschaften führt, die Polyurethanwerkstoffe mit besonders guten Festigkeits- und Härteeigenschaften liefern.

Für die Alkoxylierungsreaktion wird das Molverhältnis Alkylenoxid : alkoholmodifiziertes epoxidiertes Triglyceridöl auf einen Bereich von 1 bis 50 mol Alkylenoxid pro Mol Epoxidsauerstoff eingestellt. Auf diese Weise werden vorteilhaft relativ niedrigviskos flüssige Härter für die Umsetzung mit den Isocyanaten erhalten, die zu Polyurethanwerkstoffen mit in jeder Beziehung deutlich besseren Eigenschaften führen, als sie mit Härtern aus dem Stand der Technik erhalten werden konnten. Die niedrige Viskosität der Härtermaterialien ist auch deswegen besonders vorteilhaft, weil damit eine für den Gebrauch günstige Handhabung des Härters beim Vergießen der Isocyanat-Härter-Mischung gewährleistet ist.

Erfindungsgemäß ist es außerdem möglich, die Additionsprodukte vor und/oder nach der Alkoxylierung einer thermischen Nachbehandlung zu unterziehen. In einer bevorzugten Ausführungsform des erfindungsgemäßen Verfahrens wird der Schritt der thermischen Nachbehandlung nach der Alkoxylierungsreaktion vollzogen. Die thermische Nachbehandlung des Polyols ist deswegen vorteilhaft, weil damit das Produkt weitgehend wasserfrei gestellt werden kann. Dies reduziert beim späteren Vergießen der Isocyanat-Härter-Mischung die Möglichkeit der Blasenbildung, die weitgehend unerwünscht ist. Die thermische Nachbehandlung wird in der Praxis bei Temperaturen von 30 bis 200 °C durchgeführt. Dabei kann an die Reaktionsmischung auch ein verminderter Druck angelegt werden. Beide Maßnahmen, alleine oder gemeinsam angewandt, sorgen für eine weitgehende Abkondensation von noch in der Reaktionsmischung vorhandenem Wasser und mindern dadurch eine mögliche Blasenbildung beim Vergießen. Dieser Effekt kann noch dadurch unterstützt werden, daß in einer weiteren bevorzugten Ausführungsform im Rahmen der thermischen Nachbehandlung Wasserdampf, Heißluft oder Stickstoffgas durch die Reaktionsmischung hindurchgeleitet wird. Durch diese sogenannte "Dämpfung" werden die Eigenschaften des Härters weiter verbessert.

Im letzten Schritt des erfindungsgemäßen Verfahrens zur Herstellung neuer, massiver Polyurethanwerkstoffe im Gießen werden die auf dem vorbeschriebenen Weg hergestellten Härter, die bevorzugterweise auf epoxidiertem Sojabohnenöl, epoxidiertem Rüböl oder epoxidiertem Leinöl aufbauen, mit Isocyanaten im Verhältnis Härter-OH-Gruppen : Isocyanatgruppen im Bereich von vorzugsweise 1 : 1 bis 1 : 1,2 gemischt. Als Isocyanate lassen sich alle mindestens zwei endständige Isocyanatgruppen enthaltenden Verbindungen verwenden, die üblicherweise zur Herstellung von Polyurethanpolymeren herangezogen werden. Den mit dem erfindungsgemäßen Verfahren hergestellten massiven Polyurethanwerkstoffen liegen vorwiegend aromatische Isocyanate mit 2 bis 4 Isocyanatgruppen zugrunde. Geeignet sind sowohl solche Verbindungen, die alle Isocyanatgruppen an einem aromatischen Ring oder an mehreren miteinander in Konjugation stehenden aromatischen Ringen enthalten, wie auch solche Verbindungen, die die Isocyanatgruppen an mehreren über Alkylengruppen, beispielsweise Methylengruppen, miteinander verbundenen Ringen enthalten. Geeignet sind beispielsweise 2.4-Toluylendiisocyanat und 4.4'Diphenylmethandiisocyanat ("MDI-Polymer"), von denen das letztere für die Verarbeitung im Gießharzsektor besondere Bedeutung erlangt hat und daher bevorzugt ist. In weiteren Ausführungsformen des erfindungsgemäßen Verfahrens werden als Isocyanatkomponente Mischungen von 4.4'-Diphenylmethandiisocyanat mit höher funktionellen Isocyanaten, also beispielsweise mit substituierten Diphenylmethandiisocyanaten verwendet, welche als Substituenten einen weiteren, Isocyanatgruppen tragenden aromatischen Ring aufweisen. Besonders bevorzugt sind handelsübliche flüssige Rohmischungen von Diphenylmethandiisocyanat (MDI-Polymer), die noch oligomere Polyphenylenpolymethylenpolyisocyanate enthalten. Unter diesen flüssigen Rohmischungen sind insbesondere solche geeignet, die eine mittlere Funktionalität von 2 bis 2,5 Isocyanatgruppen pro Molekül aufweisen.

Isocyanatkomponente(n) und Härter werden erfindungsgemäß zu einer einheitlichen flüssigen Harzmasse vermischt. Schon bei dieser Mischung erweist es sich als besonders vorteilhaft, wenn Komponenten verwendet werden, deren Viskosität sehr niedrig liegt. Für die Verwendung als Gießharze zur Herstellung

neuer, massiver Polyurethanwerkstoffe ist der Einsatz niedrigviskoser Komponenten von entscheidender Bedeutung.

Der Polymerisationsmischung können nach Erhalt einer einheitlichen Harzmasse gewünschtenfalls die üblichen, in der Verwendung von Polyurethanwerkstoffen bekannten Additive zugesetzt werden. Als derartige Additive sind beispielsweise Füllstoffe, Pigmente und/oder sogenannte "Trockenmittel" zu nennen. Beispielsweise werden in einer bevorzugten Ausführungsform des Verfahrens den Polymerisationsmischungen Zeolithpasten zugesetzt. Die Verwendung derartiger Additive ist dem Fachmann auf dem Gebiet der Herstellung von Polyurethanwerkstoffen bekannt und bedarf daher keiner weiteren Ergänzung.

Die Vermischung der Isocyanatkomponente(n) mit den Härtermaterialien erfolgt ebenfalls auf an sich aus dem Stand der Technik bekannte Art und Weise, beispielsweise in üblichen Reaktionsmischgefäßen. Anschließend werden die homogenen und gegebenenfalls mit Additiven versetzten flüssigen Harzmischungen in die Formen gegossen, wo man sie, gegebenenfalls bei leicht erhöhten Temperaturen, aushärten läßt.

Durch das erfindungsgemäße Verfahren zur Herstellung neuer, massiver Polyurethanwerkstoffe werden überraschenderweise neue Werkstoffe erhalten, die den Werkstoffen aus dem Stand der Technik hinsichtlich Härte, Festigkeit und Formbeständigkeit deutlich überlegen sind und darüber hinaus auch verbesserte Werte für den elektrischen Durchgangswiderstand liefern. Daher sind diese neuen Werkstoffe insbesondere für Anwendungsbereiche des Elektroisoliersektors besonders geeignet. Zudem werden die mit dem erfindungsgemäßen Verfahren erhältlichen neuen Werkstoffe aus Ausgangsstoffen erhalten, die aus nativen Quellen stammen und aus diesen in kostengünstigen Verfahren leicht und in hohen Ausbeuten erhältlich sind. Durch Variation der Verfahrensbedingungen ist es möglich, Werkstoffe mit einer großen Bandbreite von Eigenschaften zu erhalten.

Die Erfindung wird durch die nachfolgenden Beispiele näher erläutert.

Beispiel 1

Ringöffnungsprodukt eines epoxiderten Sojabohnenöls mit Methanol, thermisch nicht nachbehandelt.

In einem Reaktionskessel mit Rückflußkühlung werden 657 kg Methanol und 1,7 kg $H_2SO_4$ (konz.) vorgelegt und zum Sieden unter Rückfluß (ca. 65 °C) erwärmt. In die siedende Lösung werden 890 kg eines käuflichen Sojaölepoxids (Edenol(R) D 81) mit einem Gehalt von 6,3 Gew.-% Epoxid-Sauerstoff nach und nach eingegeben. Durch die Reaktionswärme bleibt die Lösung auf Siedetemperatur. Nach beendeter Zugabe wird das Reaktionsgemisch noch 7,5 Stunden bei 65 °C nachgerührt. Dann wird mit 6 kg einer 30 Gew.-prozentigen Lösung von Natriummethylat in Methanol neutralisiert und das überschüssige Methanol (ca 547 kg) vollständig abdestilliert. Es bleiben ca. 1 000 kg des Umsetzungsproduktes als hellgelbe, klare Flüssigkeit zurück.

Beispiel 2

Ringöffnungsprodukt eines epoxidierten Sojabohnenöls mit Methanol, thermisch nachbehandelt.

Das nach Beispiel 1 hergestellte Ringöffnungsprodukt eines epoxidierten Sojabohnenöls mit Methanol wird in einem Reaktionskessel auf 130 °C erhitzt. Dann wird feuchter Wasserdampf durch das Material geleitet und langsam auf 160 °C aufgeheizt. Bei Erreichen von 160 °C wird die Dampfdurchleitung 1 Stunde fortgesetzt. Danach wird der Dampfstrom unterbrochen und vorsichtig Vakuum angelegt, wobei die Temperatur im Reaktionsgefäß bis auf etwa 120 °C abfallen kann. Es wird unter Wasserstrahlvakuum (ca. 20 mbar) ca. 2 bis 4 Stunden bei 120 bis 130 °C entwässert, bis ein Wassergehalt $<0,05$ % (K. Fischer) erreicht ist.

Beispiel 3

Ringöffnungsprodukt eines epoxidierten Sojabohnenöls mit Methanol, Verbleib des Katalysators im Reaktionsprodukt nach Neutralisation mit einem Dialkylethanolamin.

4 000 kg epoxidiertes Sojabohnenöl und 2 920 kg Methanol werden in einem Rührkessel vorgelegt und auf 40 °C erwärmt. Bei dieser Temperatur werden 5,1 kg $H_2SO_4$ (gelöst in 10 kg Methanol) zugesetzt. Die Temperatur steigt auf ca. 50 °C. Nach Abklingen der exothermen Reaktion wird langsam zum Rückfluß erhitzt. Zur Reaktionskontrolle wird nach 3 h eine Probe gezogen und der Epoxidgehalt bestimmt (% Epo = 0,7 bis 1,0). Nach 4 Stunden erfolgt Zugabe von 5,1 kg $H_2SO_4$ (in 10 kg Methanol), und nach Abklingen der Exothermie (ca. 10 min) wird die restliche $H_2SO_4$ (5,1 kg in 10 kg $CH_3OH$) zum Ansatz gegeben. Zur Kontrolle der Viskosität wird nach 9 Stunden eine Probe genommen (ca. 1 200 mPa.s). Liegt die Viskosität in der gewünschten Größenordnung, kann nach ca. 10 Stunden mit 20 kg Diethanolamin auf pH 7 bis 8 eingestellt werden. Der pH-Wert wird mit Universalindikator pH 0 bis 14 von Merck (Art. 9535) kontrolliert.

Das überschüssige Methanol wird anschließend abdestilliert. Die letzten Methanolreste werden durch Anlegen von Vakuum entfernt.

Die nachfolgenden Beispiele wurden im Prinzip analog Beispiel 1 ausgeführt.

Beispiel 4

Teilringöffnung eines epoxidierten Sojabohnenöls mit Methanol, thermisch nachbehandelt.

Beispiel 5

Ringöffnungsprodukt von epoxidiertem Rüböl mit Methanol.

Beispiel 6

Ringöffnungsprodukt eines teilepoxidierten Sojabohnenöls mit Methanol.

Beispiel 7

Ringöffnungsprodukt eines epoxidierten Sojabohnenöls mit n-Butanol.

Beispiel 8

Ringöffnungsprodukt eines epoxidierten Sojabohnenöls mit n-Octanol.

Beispiel 9

Ringöffnungsprodukt eines epoxidierten Leinöls mit Methanol.

Die gemäß den Beispielen 1 bis 9 erhaltenen Polyol-Härter-Komponenten hatten die in der nachfolgenden Tabelle 1 aufgelisteten Eigenschaften:

Tabelle 1

Eigenschaften der nach den Beispielen 1 bis 9 erhaltenen Produkte

| Produkt Beispiel | Viskosität (bei 25°C mPa.s) | OHZ | VZ | JZ |
|---|---|---|---|---|
| 1 (C) | 550 | 232 | 159 | 14 |
| 2 (B) | 760 | 209 | 162 | 14 |
| 3 (D) | 640 | 225 | 161 | 19,6 |
| 4 (A) | 7 300 | 140 | 173 | 36 |
| 5 (E) | 520 | 220 | 157 | 10 |
| 6 (F) | 800 | 147 | 171 | 44 |
| 6 (G) | 1 100 | 158 | 172 | 36 |
| 7 (E) | 7 500 | 124 | 164 | 34,4 |
| 8 (I) | 4 600 | 109 | 145 | 31,5 |
| 9 (L) | 1 100 | 288 | 148 | 23 |

Vergleichsbeispiel 1

Als Polyolkomponente (X) wurde ein handelsübliches Rizinusöl mit folgenden Parametern eingesetzt:
Viskosität bei 25 ° C (mPa.s): 700;
OHZ: 161;
VZ: ca. 180 und
JZ: 86.

Vergleichsbeispiel 2

Als weitere Polyolkomponente (Y) wurde ein handelsübliches tetrafunktionelles, stark verzweigtes Polyetherpolyol eingesetzt. Die Verbindung hatte bei 25 ° C eine Viskosität von 30 000 mPa.s und eine OHZ von ca. 768.

Beispiel 10

In einer üblichen Mischapparatur wurden die in den Beispielen 1 bis 9 sowie die in den Vergleichsbeispielen 1 und 2 beschriebenen Polyolkomponenten in den aus Tabelle 2 ersichtlichen Mengen (Gewichtsteile) mit den ebenfalls aus Tabelle 2 ersichtlichen Mengen an Diphenylmethandiisocyanat (MDI-Polymer) vermischt und als Additiv ein Trockenmittel (Zeolithpaste) in den ebenfalls aus Tabelle 2 ersichtlichen Mengen (Gewichtsteile) zugegeben. Bei der Herstellung dieser Gießharz-Zusammensetzungen wurde kein Katalysator verwendet.

## Tabelle 2

**Gießharze ohne Katalysator**

a) Gießharzzusammensetzung

Einzelbestandteile (Gew.-Teile)

| | | | | | | | | | | | | | | | |
|---|---|---|---|---|---|---|---|---|---|---|---|---|---|---|---|
| Polyol A | 100 | | | | | | | | | | | | 50 | | |
| B | | 100 | | | | | | | | | | | | 50 | |
| C | | | 100 | | | | | | | | | | | | |
| D | | | | 100 | | | | | | 90 | 95 | | | | |
| E | | | | | 100 | | | | | | | | | | |
| F | | | | | | 100 | | | | | | | | | |
| G | | | | | | | 100 | | | | | | | | |
| H | | | | | | | | 100 | | | | | | | |
| I | | | | | | | | | 100 | | | | | | |
| X | | | | | | | | | | | | 100 | 50 | 50 | |
| Y | | | | | | | | | | 10 | 5 | | | | |
| L | | | | | | | | | | | | | | | 10 |
| Isocyanat MDI-Polym. | 41 | 60 | 65 | 63 | 62 | 42 | 45 | 36 | 31 | 79 | 72 | 44 | 42 | 53 | 7 |
| Trockenmittel Zeolith-Paste | 10 | 10 | 10 | 10 | 10 | 10 | 10 | 10 | 10 | 10 | 10 | 10 | 10 | 10 | 1 |

b) Eigenschaften der Gießharzmasse nach Reaktion

| Shore Härte A | | | | | | | | | | | | | | | |
|---|---|---|---|---|---|---|---|---|---|---|---|---|---|---|---|
| n. 24 h | 45 | 18 | 25 | 20 | — | — | — | — | — | — | -- | 67 | 55 | 30 | — |
| n. 48 h | -- | -- | -- | -- | 47 | 30 | — | — | — | — | -- | 70 | 80 | 40 | — |
| n. 72 h | -- | -- | -- | -- | 74 | 48 | 67 | 65 | 57 | -- | — | 72 | 81 | 72 | — |
| n. 196 h | -- | -- | -- | -- | -- | 78 | 87 | 81 | 66 | — | -- | 75 | 87 | 84 | — |

| Shore Härte D | | | | | | | | | | | | | | | |
|---|---|---|---|---|---|---|---|---|---|---|---|---|---|---|---|
| n. 24 h | -- | -- | -- | -- | -- | -- | -- | -- | -- | 55 | 32 | -- | -- | -- | 56 |
| n. 48 h | 20 | 19 | 25 | 20 | -- | -- | — | — | — | 65 | 50 | — | 22 | -- | 70 |
| n. 72 h | 29 | 35 | 43 | 35 | — | -- | -- | -- | -- | 71 | 59 | -- | 26 | -- | 73 |
| n. 192 h | 55 | 57 | 65 | 61 | 47 | 21 | 28 | 23 | <20 | 75 | 69 | -- | 30 | 27 | 78 |

Beispiel 11

In gleicher Weise wie in Beispiel 10 wurden Gießharz-Zusammensetzungen hergestellt, deren Einzelbestandteile aus Tabelle 3 hervorgehen. Im Gegensatz zu der Vorgehensweise in Beispiel 10 wurden jedoch die aus Tabelle 3 ersichtlichen Mengen an Katalysator (in Gewichtsteilen) zugesetzt.

Die Eigenschaften der nach Härtung entstandenen Gießharzwerkstoffe ergeben sich ebenfalls aus Tabelle 3.

Tabelle 3

Gießharze mit Katalysator

a) Gießharzzusammensetzung

Einzelbestandteile (Gew.-Teile)

| | | | | | | |
|---|---|---|---|---|---|---|
| Polyol A | 100 | | | | | |
| B | | 100 | | | | |
| C | | | 100 | | | |
| D | | | | 100 | | |
| X | | | | | 100 | |
| L | | | | | | 100 |
| Isocyanat MDI-Polymer | 41 | 60 | 65 | 63 | 44 | 77 |
| Trockenmittel Zeolith-Paste | 10 | 10 | 10 | 10 | 10 | 10 |
| Katalysator Dabco 33 LV (Air Products) | 0,4 | 0,4 | 0,4 | 0,4 | 0,4 | 0,4 |

b) Eigenschaften der Gießharzmasse nach Reaktion

| | | | | | | |
|---|---|---|---|---|---|---|
| Shore Härte A | | | | | | |
| n. 24 h | -- | -- | -- | -- | 70 | -- |
| n. 48 h | -- | -- | -- | -- | 72 | -- |
| n. 72 h | -- | -- | -- | -- | 73 | -- |
| n. 192 h | -- | -- | -- | -- | 74 | -- |
| Shore Härte D | | | | | | |
| n. 24 h | 24 | 53 | 41 | 41 | -- | 72 |
| n. 48 h | 27 | 55 | 51 | 52 | -- | 75 |
| n. 72 h | 29 | 57 | 65 | 54 | -- | 76 |
| n. 192 h | 51 | 64 | 67 | 63 | -- | 77 |

Beispiel 12

Wie in Beispiel 11 wurden Gießharz-Zusammensetzungen hergestellt, wobei die aus Tabelle 4 ersichtlichen Mengen an Katalysator bei der Zusammenmischung der Komponenten zugesetzt wurden.

Die Eigenschaften der daraus nach Reaktion entstandenen Polyurethanwerkstoffe sind ebenfalls der nachfolgenden Tabelle 4 zu entnehmen.

Tabelle 4

Gießharze mit Katalysator

a) Gießharzzusammensetzung

| Einzelbestandteile (Gew.-Teile) | | | | | |
|---|---|---|---|---|---|
| Polyol A | 100 | | | | |
| B | | 100 | | | |
| C | | | 100 | | |
| D | | | | 100 | |
| X | | | | | 100 |
| Isocanant MDI-Polymer | 41 | 60 | 65 | 63 | 44 |
| Trockenmittel Zeolith-Paste | 10 | 10 | 10 | 10 | 10 |
| Katalysator Dabco 33 LV (Air Products) | 0,8 | 0,8 | 0,8 | 0,8 | 0,8 |
| **b) Eigenschaften der Gießharzmasse nach Reaktion** | | | | | |
| Shore Härte A | | | | | |
| n. 24 h | -- | -- | -- | -- | 73 |
| n. 48 h | -- | -- | -- | -- | 74 |
| n. 72 h | -- | -- | -- | -- | 76 |
| n. 192 h | -- | -- | -- | -- | 76 |
| Shore Härte D | | | | | |
| n. 24 h | 32 | 62 | 53 | 56 | -- |
| n. 48 h | 33 | 63 | 60 | 61 | -- |
| n. 72 h | 34 | 63 | 69 | 61 | -- |
| n. 192 h | 50 | 69 | 70 | 65 | -- |
| Reißfestigkeit (MPa) | 5,8 | 18,0 | 14,2 | 17,4 | 4,4 |
| Spezifischer Durchgangswiderstand [Ω cm] n.24h | $3{,}0.10^{14}$ | $1{,}8.10^{15}$ | $1{,}6.10^{15}$ | $1{,}3.10^{15}$ | $7{,}6.10^{14}$ |
| Spezifischer Durchgangswiderstand [Ω cm] n.168h | $1{,}4.10^{15}$ | $2{,}2.10^{15}$ | $2{,}3.10^{15}$ | $2{,}2.10^{15}$ | $5{,}0.10^{14}$ |
| Glasübergangstemperatur (°C) | 31 | 55 | 47 | 44 | 8 |
| Wärmeformbeständigkeit (°C) | 48 | 47 | 50 | 48 | 42 |

## Patentansprüche

1. Verfahren zur Herstellung massiver Polyurethanwerkstoffe im Gießverfahren unter Verwendung wenigstens zwei Isocyanatgruppen pro Molekül enthaltender Isocyanate und mindestens zwei Hydroxygruppen pro Molekül enthaltender Alkohole, dadurch gekennzeichnet, daß man

(a) einwertige Alkohole mit 1 bis 8 C-Atomen unter Einstellung eines Molverhältnisses im Bereich von 1,05 bis 10 Mol pro Mol Epoxidsauerstoff an epoxidierte Triglyceridöle addiert

(b) die gegebenenfalls gereinigten Additionsprodukte gewünschtenfalls mit Alkylenoxiden mit 2 bis 4 C-Atomen im Molverhältnis von 1 bis 50 Mol Alkylenoxid pro Mol Epoxidsauerstoff umsetzt

(c) die Produkte vor oder nach der Alkoxylierung gegebenenfalls einer thermischen Nachbehandlung unterzieht und

(d) die resultierenden Produkte mit den Isocyanaten im Verhältnis OH : NCO im Bereich vom 1 : 0,9 bis 1,3 zu einer einheitlichen flüssigen Harzmasse vermischt, gegebenenfalls Additive zusetzt und die Reaktionsmischung in einer Form aushärten läßt.

**2.** Verfahren nach Anspruch 1, dadurch gekennzeichnet, daß man einen einwertigen Alkohol aus der Gruppe Methanol, Ethanol, n-Propanol, i-Propanol, n-Butanol, i-Butanol und t-Butanol an epoxidierte Triglyceridöle addiert.

**3.** Verfahren nach Anspruch 2, dadurch gekennzeichnet, daß man Methanol an epoxidierte Triglyceridöle addiert.

**4.** Verfahren nach Ansprüchen 1 bis 3, dadurch gekennzeichnet, daß man einen einwertigen Alkohol an epoxidierte Triglyceridöle mit einem Gehalt von 3 bis 10 Gew.-% Epoxidsauerstoff addiert.

**5.** Verfahren nach Anspruch 4, dadurch gekennzeichnet, daß man einen einwertigen Alkohol an epoxidierte Triglyceridöle mit einem Gehalt von 4 bis 8 Gew.-% Epoxidsauerstoff addiert.

**6.** Verfahren nach Ansprüchen 1 bis 5, dadurch gekennzeichnet, daß man die Addition eines einwertigen Alkohols an ein epoxidiertes Triglyceridöl in Gegenwart eines sauren Katalysators durchführt.

**7.** Verfahren nach Ansprüchen 1 bis 6, dadurch gekennzeichnet, daß der Katalysator nach Neutralisation im Produkt verbleibt.

**8.** Verfahren nach Ansprüchen 1 bis 7, dadurch gekennzeichnet, daß der Katalysator nach Neutralisation mit einem Dialkylethanolamin, vorzugsweise Dimethyl- oder Diethylethanolamin, im Produkt verbleibt.

**9.** Verfahren nach Ansprüchen 1 bis 8, dadurch gekennzeichnet, daß man die Addition eines einwertigen Alkohols an ein epoxidiertes Triglyceridöl unter Einstellung eines Molverhältnisses Alkohol : Triglyceridöl im Bereich von 3 bis 10 mol Alkohol pro Mol Epoxidsauerstoff durchführt.

**10.** Verfahren nach Ansprüchen 1 bis 9, dadurch gekennzeichnet, daß man die Additionsprodukte nach an sich bekannten Methoden von überschüssigen bzw. nicht umgesetzten Edukten reinigt.

**11.** Verfahren nach Ansprüchen 1 bis 10, dadurch gekennzeichnet, daß man die gereinigten Produkte mit Ethylenoxid und/oder Propylenoxid umsetzt.

**12.** Verfahren nach Ansprüchen 1 bis 11, dadurch gekennzeichnet, daß man die Produkte einer thermischen Nachbehandlung nach der Alkoxylierung unterzieht.

**13.** Verfahren nach Ansprüchen 1 bis 12, dadurch gekennzeichnet, daß man die Produkte einer thermischen Nachbehandlung nach der Alkoxylierung bei Temperaturen von 30 bis 200 ° C unterzieht.

**14.** Verfahren nach Ansprüchen 1 bis 13, dadurch gekennzeichnet, daß man die Produkte einer thermischen Nachbehandlung bei vermindertem Druck unterzieht.

**15.** Verfahren nach Ansprüchen 1 bis 14, dadurch gekennzeichnet, daß man die Produkte einer thermischen Nachbehandlung unter Hindurchleiten von Wasserdampf, Heißluft oder $N_2$ unterwirft.

**16.** Verfahren nach Ansprüchen 1 bis 15, dadurch gekennzeichnet, daß man die resultierenden Produkte mit den Isocyanaten im Verhältnis Härter-OH-Gruppen : Isocyanatgruppen im Bereich von 1 : 1 bis 1 : 1,2, mischt.

17. Verfahren nach Ansprüchen 1 bis 16, dadurch gekennzeichnet, daß man als Additive Füllstoffe, Pigmente und/oder Trockenmittel zusetzt.

18. Verfahren nach Anspruch 17, dadurch gekennzeichnet, daß man als Additive Zeolithpasten zusetzt.

19. Massive Polyurethanwerkstoffe hergestellt gemäß mindestens einem der vorstehenden Ansprüche.

20. Verwendung von Polyolen, die dadurch herstellbar sind, daß man
(a) einwertige Alkohole mit 1 bis 8 C-Atomen unter Einstellung eines Molverhältnisses im Bereich von 1,05 bis 10 Mol pro Mol Epoxidsauerstoff an epoxidierte Triglyceridöle addiert
(b) die gegebenenfalls gereinigten Additionsprodukte gewünschtenfalls mit Alkylenoxiden mit 2 bis 4 C-Atomen im Molverhältnis von 1 bis 50 Mol Alkylenoxid pro Mol Epoxidsauerstoff umsetzt
(c) die Produkte vor oder nach der Alkoxylierung gegebenenfalls einer thermischen Nachbehandlung unterzieht
zur Herstellung massiver Polyurethanwerkstoffe durch Umsetzung mit wenigstens zwei Isocyantgruppen pro Molekül enthaltenden Isocyanaten im Gießverfahren, wobei das Verhältnis OH : NCO im Bereich von 1 : 0,9 bis 1,3 liegt.

**Claims**

1. A process for the production of solid polyurethane materials by casting using isocyanates containing at least two isocyanate groups per molecule and alcohols containing at least two hydroxy groups per molecule, characterized in that
(a) monohydric $C_{1-8}$ alcohols are added onto epoxidized triglyceride oils, establishing a molar ratio of 1.05 to 10 mol per mol epoxide oxygen,
(b) if desired, the optionally purified addition products are reacted with $C_{2-4}$ alkylene oxides in a molar ratio of 1 to 50 mol alkylene oxide per mol epoxide oxygen,
(c) the products are optionally subjected to a thermal aftertreatment before or after alkoxylation and
(d) the resulting products are mixed with the isocyanates in the OH:NCO ratio of 1:0.9 to 1.3 to form a homogeneous liquid resin mixture, additives are optionally added and the reaction mixture is left to cure in a mould.

2. A process as claimed in claim 1, characterized in that a monohydric alcohol from the group comprising methanol, ethanol, n-propanol, i-propanol, n-butanol, i-butanol and t-butanol is added onto epoxidized triglyceride oils.

3. A process as claimed in claim 2, characterized in that methanol is added onto epoxidized triglyceride oils.

4. A process as claimed in claims 1 to 3, characterized in that a monohydric alcohol is added onto epoxidized triglyceride oils having an epoxide oxygen content of 3 to 10% by weight.

5. A process as claimed in claim 4, characterized in that a monohydric alcohol is added onto epoxidized triglyceride oils having an epoxide oxygen content of 4 to 8% by weight.

6. A process as claimed in claims 1 to 5, characterized in that the addition of a monohydric alcohol onto an epoxidized triglyceride oil is carried out in the presence of an acidic catalyst.

7. A process as claimed in claims 1 to 6, characterized in that the catalyst remains in the product after neutralization.

8. A process as claimed in claims 1 to 7, characterized in that the catalyst remains in the product after neutralization with a dialkyl ethanolamine, preferably dimethyl or diethyl ethanolamine.

9. A process as claimed in claims 1 to 8, characterized in that the addition of a monohydric alcohol onto an epoxidized triglyceride oil is carried out at a molar ratio of alcohol to triglyceride oil of preferably 3 to 10 mol alcohol per mol epoxide oxygen.

**10.** A process as claimed in claims 1 to 9, characterized in that the addition products are freed from excess or unreacted educts by methods known *per se.*

**11.** A process as claimed in claims 1 to 10, characterized in that the purified products are reacted with ethylene oxide and/or propylene oxide.

**12.** A process as claimed in claims 1 to 11, characterized in that the products are subjected to a thermal aftertreatment after the alkoxylation.

**13.** A process as claimed in claims 1 to 12, characterized in that the products are subjected after the alkoxylation to a thermal aftertreatment at temperatures of 30 to 200 °C.

**14.** A process as claimed in claims 1 to 13, characterized in that the products are subjected to a thermal aftertreatment under reduced pressure.

**15.** A process as claimed in claims 1 to 14, characterized in that the products are subjected to a thermal aftertreatment while steam, hot air or nitrogen is passed through.

**16.** A process as claimed in claims 1 to 15, characterized in that the resulting products are mixed with the isocyanates in a ratio of curing agent OH groups to isocyanate groups of preferably 1:1 to 1:1.2.

**17.** A process as claimed in claims 1 to 16, characterized in that fillers, pigments and/or drying agents are used as additives.

**18.** A process as claimed in claim 17, characterized in that zeolite pastes are used as additives.

**19.** Solid polyurethane materials produced in accordance with any of the preceding claims.

**20.** The use of polyols obtainable by

(a) addition of monohydric $C_{1-8}$ alcohols onto epoxidized triglyceride oils, establishing a molar ratio of 1.05 to 10 mol per mol epoxide oxygen,

(b) if desired, reaction of the optionally purified addition products with $C_{2-4}$ alkylene oxides in a molar ratio of 1 to 50 mol alkylene oxide per mol epoxide oxygen,

(c) optionally subjecting the products to a thermal aftertreatment before or after alkoxylation

for the production of solid polyurethane materials by reaction with isocyanates containing at least two isocyanate groups per molecule using the casting process, the OH:NCO ratio being 1:0.9 to 1:3.

**Revendications**

**1.** Procédé de fabrication de matériaux de polyuréthane massifs, en méthode de coulée, en mettant en oeuvre des isocyanates comportant au moins deux groupes isocyanate par molécule et des alcools présentant au moins deux groupes hydroxyle par molécule, qui est caractérisé en ce que l'on

(a) additionne des alcools monovalents ou monoalcools comportant 1 à 8 atomes de C à des huiles triglycéridiques époxydées, en ajustant le rapport molaire dans l'intervalle de 1,05 à 10 moles par mole d'oxygène époxydique,

(b) fait réagir les produits d'addition éventuellement purifiés avec des oxydes d'alkylène comportant 2 à 4 atomes de C, dans un rapport molaire allant de 1 à 50 moles d'oxyde d'alkylène par mole d'oxygène époxydique,

(c) soumet éventuellement les produits à un posttraitement thermique, avant ou après l'alcoxylation, et en ce que l'on

(d) mélange, en une masse de résine liquide et homogène, les produits résultants avec les isocyanates dans un rapport OH:NCO situé dans l'intervalle de 1:0,9 à 1,3, en ce que l'on ajoute éventuellement des additifs et laisse durcir le mélange réactionnel dans un moule.

**2.** Procédé selon la revendication 1, caractérisé en ce que l'on additionne à des huiles triglycéridiques époxydées un alcool monovalent faisant partie du groupe du méthanol, éthanol, n-propanol, i-propanol, n-butanol, i-butanol: et t-butanol.

3. Procédé selon la revendication 2, caractérisé ce que l'on additionne du méthanol à des huiles triglycéridiques époxydées.

4. Procédé selon les revendications 1 à 3, caractérisé en ce que l'on additionne un alcool monovalent à des huiles triglycéridiques époxydées renfermant 3 à 10 % en poids d'oxygène époxydique.

5. Procédé selon la revendication 4, caractérisé en ce que l'on additionne un alcool monovalent à des huiles triglycéridiques époxydées renfermant 4 à 8 % en poids d'oxygène époxydique.

6. Procédé selon les revendications 1 à 5, caractérisé en ce que l'on effectue l'addition d'un alcool monovalent à une huile triglycéridique époxydée en présence d'un catalyseur acide.

7. Procédé selon les revendications 1 à 6, caractérisé en ce que le catalyseur reste dans le produit après neutralisation.

8. Procédé selon les revendications 1 à 7, caractérisé en ce que le catalyseur reste dans le produit après neutralisation par une dialkyléthanolamine, de préférence une diméthyl- ou une diéthyléthanolamine.

9. Procédé selon les revendications 1 à 8, caractérisé en ce que l'on opère l'addition d'un alcool monovalent à une huile triglycéridique époxydée, en ajustant le rapport molaire alcool:huile triglycéridique dans l'intervalle allant de 3 à 10 moles d'alcool par mole d'oxygène époxydique.

10. Procédé selon les revendications 1 à 9, caractérisé en ce que l' on purifie les produits d'addition des éduits en excès ou non entrés en réaction, selon des méthodes connues en soi.

11. Procédé selon les revendications 1 à 10, caractérisé en ce que l'on fait réagir les produits purifiés avec de l'oxyde d'éthylène et/ou de l'oxyde de propylène.

12. Procédé selon les revendications 1 à 11, caractérisé en ce que l'on soumet les produits à un posttraitement thermique après l'alcoxylation.

13. Procédé selon les revendications 1 à 12, caractérisé en ce que l'on soumet les produits à un posttraitement thermique après l'alcoxylation, à des températures allant de 30 à 200 °C.

14. Procédé selon les revendications 1 à 13, caractérisé en ce que l'on soumet les produits à un posttraitement thermique, sous pression réduite.

15. Procédé selon les revendications 1 à 14, caractérisé en ce que l'on soumet les produits à un posttraitement thermique, sous injection de vapeur d'eau, d'air chaud ou de $N_2$.

16. Procédé selon les revendications 1 à 15, caractérisé en ce que l'on mélange les produits résultants avec les isocyanates, dans un rapport groupes OH de durcisseur:groupes isocyanate, situé dans l'intervalle de 1:1 à 1:1,2.

17. Procédé selon les revendications 1 à 16, caractérisé en ce que l'on ajoute comme additifs des charges, des pigments et/ou des déshydratants.

18. Procédé selon la revendication 17, caractérise en ce que l'on ajoute comme additifs des pâtes de zéolithe.

19. Matériaux massifs de polyuréthane fabriqués conformément à au moins une des revendications ci-avant.

20. Mise en oeuvre de polyols, obtenables
(a) en additionnant des alcools monovalents ou monoalcools comportant 1 à 8 atomes de C à des huiles triglycéridiques époxydées, moyennant l'ajustement d'un rapport molaire allant de 1,05 à 10 modes par mode d'oxygène époxydique,

(b) en faisant réagir les produits d'addition éventuellement purifiés avec des oxydes d'alkylène comportant 2 à 4 atomes de C, dans un rapport molaire allant de 1 à 50 moles d'oxyde d'alkylène par mode d'oxygène époxydique,

(c) en soumettant les produits éventuellement à un posttraitement thermique, avant ou après l'alcoxylation,

pour fabriquer en méthode de coulée des matériaux massifs de polyuréthane par mise en réaction avec des isocyanates comportant au moins deux groupes isocyanate par molécule, le rapport OH:NCO étant compris dans l'intervalle de 1:0,9 à 1,3.